**Europäisches Patentamt**

**European Patent Office**

**Office européen des brevets**

(11) Veröffentlichungsnummer: **0 439 037 A1**

## (12) EUROPÄISCHE PATENTANMELDUNG

(21) Anmeldenummer: **91100346.5**

(22) Anmeldetag: **12.01.91**

(51) Int. Cl.5: **F16K 37/00**

(30) Priorität: **20.01.90 DE 9000605 U**

(43) Veröffentlichungstag der Anmeldung:
**31.07.91 Patentblatt 91/31**

(84) Benannte Vertragsstaaten:
**BE DE FR GB IT NL**

(71) Anmelder: **UNIVAM Peter Janssen-Weets KG**
**Bargloyer Weg 14**
**W-2878 Wildeshausen(DE)**

(72) Erfinder: **Janssen-Weets, Peter**
**Ligusterweg 9**
**W-2849 Goldenstedt(DE)**

(74) Vertreter: **Eisenführ, Speiser & Strasse**
**Martinistrasse 24**
**W-2800 Bremen 1(DE)**

(54) **Armatur.**

(57) Die Erfindung betrifft eine Armatur mit einem
über eine Schaltwelle (8) in verschiedene Betriebsstellungen bewegbaren Organ. Um eine sichere Erfassung der tatsächlichen Stellung der Schaltwelle
(8) bei einer direkten Montage einer Antriebsvorrichtung an einem Befestigungsflansch der Armatur zu
ermöglichen, ohne das Bauvolumen wesentlich zu
erhöhen, ist mindestens ein Sensor (18) zur Erfassung der Stellung der Schaltwelle (8) innerhalb einer
offenen Ausnehmung (16) an der Stirnfläche (4) des
Befestigungsflansches (2) vorgesehen.

Fig. 1

EP 0 439 037 A1

# ARMATUR

## Beschreibung

Die Erfindung betrifft eine Armatur mit einem über eine Schaltwelle in verschiedene Betriebsstellungen bewegbaren Organ und mit einem Befestigungsflansch, durch dessen Stirnfläche die Schaltwelle mit ihrem einen Ende für den Anschluß an eine an der Stirnfläche des Befestigungsflansches zu befestigende Antriebsvorrichtung nach außen geführt ist.

Derartige Armaturen sind bekannt. Bei diesen Armaturen bildet der Befestigungsflansch mit seiner Stirnfläche eine Schnittstelle zur Antriebsvorrichtung. Die Antriebsvorrichtung ist nämlich an der Stirnfläche des Befestigungsflansches zu montieren. Da durch die Stirnfläche des Befestigungsflansches die Schaltwelle mit ihrem einen Ende nach außen geführt ist, ist die Antriebsvorrichtung so ausgeführt, daß sie beim Aufsetzen auf die Stirnfläche des Befestigungsflansches in Wirkeingriff mit der Schaltwelle gebracht wird. Hierzu besitzt die Antriebsvorrichtung in der Regel eine von einem Antrieb angetriebene Ausgangswelle, die an die Schaltwelle der Armatur ankuppelbar ist, und zwar axial fluchtend, wenn die Schaltwelle der Armatur von der Ausgangswelle der Antriebsvorrichtung rotierend angetrieben wird. Die Abmessungen der zuvor beschriebenen Schnittstelle zwischen der Armatur und der daran zu befestigenden Antriebsvorrichtung sind genormt.

Unter die zuvor beschriebene Armatur fällt beispielsweise auch ein Stellventil zur Steuerung des Durchflusses eines Mediums wie z. B. einer Flüssigkeit. Das bewegbare Organ dient dabei zum Verschließen des Stellventils. Im allgemeinen ist das bewegbare Organ bei einem Stellventil als Klappenscheibe, Kugel, Küken oder Kegel ausgebildet und ist in seinem Gelenk-bzw. Drehpunkt mit der Schaltwelle drehfest verbunden, deren Achse mit der Gelenk- bzw. Drehachse fluchtet, so daß die Schaltwelle zum Schließen und Öffnen des bewegbaren Organs entsprechend gedreht werden muß.

Um die Stellung der Schaltwelle und somit die Betriebsstellung des bewegbaren Organs erfassen und anzeigen zu können, mußten bisher zusätzliche Adapter und Bauelemente vorgesehen werden, welche im allgemeinen entweder zwischen der Armatur und der Antriebsvorrichtung oder an einer zusätzlichen Schnittstelle an der Antriebsvorrichtung montiert wurden.

Im ersten Fall, d. h. bei der Montage zwischen der Armatur und der Antriebsvorrichtung, wurde eine Gebereinheit auf die Stirnfläche des Befestigungsflansches aufgesetzt, während die Antriebsvorrichtung dann an der der Stirnfläche des Befestigungsflansches entfernten Seite der Gebereinheit befestigt wurde. Dies hatte zur Folge, daß dadurch die Antriebsvorrichtung in einem Abstand zur Armatur angeordnet werden mußte. Damit dabei die Wirkverbindung der Schaltwelle mit der Antriebsvorrichtung nicht verloren ging, mußte innerhalb der Gebereinheit ein Wellenverbindungsstück zwischen dem freien Ende der Schaltwelle und der Antriebsvorrichtung zwischengeschaltet werden. Für ein Stellventil der oben beschriebenen Art wies eine solche Gebereinheit einen rahmenförmigen Adapter, welcher mit seiner einen Seite an der Stirnfläche des Befestigungsflansches des Stellventils montiert wurde und an dessen gegenüberliegender Seite die Antriebsvorrichtung mit ihrem entsprechenden Gegenflansch angesetzt wurde, sowie das zuvor beschriebene Zwischenwellenstück auf, welches durch Bohrungen im Adapter hindurchgeführt wurde und mit einem Anzeigestift versehen war. Dieser Anzeigestift bildete somit eine mechanische Anzeige der Drehstellung der Schaltwelle. Da jedoch in der Regel die Sichtverhältnisse am Einbauort des Stellventils von Anwendung zu Anwendung recht unterschiedlich sind, mußte der Anzeigestift nachträglich justiert werden. Dabei stellte sich heraus, daß diese nachträgliche Justierung nicht immer korrekt durchgeführt wurde. Wegen der häufig am Einbauort herrschenden beengten räumlichen Verhältnisse war auch bei korrekter Justierung des Anzeigestiftes ein einwandfreie Erkennung der Drehstellung der Schaltwelle nicht immer möglich.

Ein gravierender Nachteil dieser Art der Anordnung der Gebereinheit zwischen der Armatur und der Antriebsvorrichtung liegt in der Erhöhung des Bauvolumens der Gesamtanordnung aus Armatur und Antriebsvorrichtung, was nämlich wegen der häufig am Einbauort herrschenden beengten räumlichen Verhältnisse nicht immer möglich ist und auch der entsprechenden Norm widerspricht. Aus diesen Gründen ist eine direkte Montage der Antriebsvorrichtung an der Stirnfläche des Befestigungsflansches mit der Armatur unumgänglich.

Im zweiten Fall, nämlich bei der Montage der Gebereinheit an einer zusätzlichen Schnittstelle an der Antriebsvorrichtung wird zwar die Forderung nach einer direkten Befestigung der Antriebsvorrichtung an der Armatur erfüllt, jedoch wird auf diese Weise das gesamte Bauvolumen nicht verkleinert, da derartige Gebereinheiten aus einem kastenförmigen Gehäuse mit darin angeordneten Endschaltern bestanden. Durch das Erfordernis, eine zusätzliche Schnittstelle für die Gebereinheit an der Antriebsvorrichtung vorzusehen, wurde der Aufwand noch erhöht. Außerdem konnte die Stellung der Schaltwelle mit einer derartigen Gebereinheit nur mittelbar angezeigt werden, was insbesondere bei einem Fehler in der Antriebsvorrichtung zu einer fehlerhaften Anzeige führte.

Schließlich bestand ein weiterer Nachteil der zuvor beschriebenen Gebereinheiten darin, daß sie als zusätzliche Bauteile an der Armatur und/oder der Antriebsvorrichtung angebracht werden mußten, wodurch sich der Montageaufwand erhöhte.

Aufgabe der Erfindung ist es daher, eine Armatur der eingangs genannten Art derart weiterzubilden, daß eine sichere Erfassung der tatsächlichen Stellung der Schaltwelle bei direkter Montage der Antriebsvorrichtung am Befestigungsflansch der Armatur möglich ist, wobei das gesamte Bauvolumen nicht oder im Gegensatz zum Stand der Technik nicht wesentlichen erhöht wird.

Diese Aufgabe wird dadurch gelöst, daß mindestens ein Sensor zur Erfassung der Stellung der Schaltwelle und somit der Betriebsstellung des bewegbaren Organs innerhalb einer an der Stirnfläche des Befestigungsflansches vorgesehenen und zur Schaltwelle offenen Ausnehmung angeordnet ist.

Demnach wird der Sensor nicht mehr wie die herkömmlichen Gebereinheiten außerhalb der Armatur zwischen dieser und der Antriebsvorrichtung oder gesondert an der Antriebsvorrichtung, sondern innerhalb des Befestigungsflansches der Armatur angeordnet, und zwar innerhalb der an der Stirnfläche des Befestigungsflansches vorgesehenen Ausnehmung. Da der Sensor somit innerhalb des Befestigungsflansches "verschwindet", ist eine direkte Montage der Antriebsvorrichtung an der Stirnfläche des Befestigungsflansches möglich, ohne daß dabei das Bauvolumen der Gesamtanordnung aus Armatur und Antriebsvorrichtung vergrößert wird. Ist die Antriebsvorrichtung mit ihrem Gegenflansch auf der Stirnfläche des Befestigungsflansches der Armatur aufgesetzt, bildet die Ausnehmung in der Stirnfläche des Befestigungsflansches einen geschlossenen Hohlraum, innerhalb dessen der Sensor angeordnet ist. Somit ist die Anordnung eines Deckels für das Abdecken der Ausnehmung zum Schutz des Sensors nicht notwendig. Damit der Sensor die Stellung der Schaltwelle messen kann, ist die Ausnehmung zur Schaltwelle hin offen. Auf diese Weise wird erreicht, daß der Sensor direkt die tatsächliche Stellung der Schaltwelle erfassen kann. Da der Sensor durch die erfindungsgemäße Anordnung innerhalb des Befestigungsflansches somit in der Armatur integriert ist, bildet er zusammen mit der Armatur eine komplette Baueinheit, wodurch die Montage vereinfacht wird. Außerdem braucht der Monteur den Sensor vor Ort nicht mehr zu justieren, da dies bereits bei der Herstellung der Armatur erfolgen kann. Somit lassen sich auch Justierungsfehler mit der erfindungsgemäßen Anordnung weitestgehend ausschließen. Als weiterer Vorteil der Erfindung ist noch zu nennen, daß der Sensor leicht zugänglich und austauschbar ist.

An dieser Stelle sei noch angemerkt, daß die Schaltwelle auch als Hub- und/oder Stellspindel ausgebildet sein kann.

Bei einer bevorzugten Ausführungsform der Erfindung besteht der Sensor aus einem mechanischen Zeiger, der mit der Schaltwelle drehfest verbunden und innerhalb der Ausnehmung entsprechend der Stellung der Schaltwelle frei bewegbar angeordnet ist, wobei sich das freie Ende des mechanischen Zeigers durch eine die Ausnehmung mit der Außenseite des Befestigungsflansches außerhalb von dessen Stirnfläche verbindende Durchführung erstreckt. Mit dieser Ausführung wird in besonders einfacher Weise eine direkte Erfassung und Anzeige der tatsächlichen Stellung der Schaltwelle realisiert. Dabei zeigt die Position des freien Endes des mechanischen Zeigers innerhalb der Durchführung die Stellung der Schaltwelle direkt an.

Eine Weiterbildung dieser Ausführung zeichnet sich dadurch aus, daß der mechanische Zeiger einen ersten Schenkel, der im wesentlichen radial an der Schaltwelle befestigt und innerhalb der Ausnehmung angeordnet ist, und einen winklig an den ersten Schenkel angesetzten zweiten Schenkel aufweist, der von der Stirnfläche weg gerichtet ist und sich durch einen die Durchführung bildenden länglichen Schlitz erstreckt, der entlang einer Kreisbahn um die Längsachse der Schaltwelle verläuft. Diese Weiterbildung eignet sich im wesentlichen zur Erfassung der Drehstellung der Schaltwelle. Sie erlaubt ferner nur eine geringe Tiefe der Ausnehmung in der Stirnfläche des Befestigungsflansches, wenn insbesondere die Schaltwelle in axialer Richtung nicht verschiebbar angeordnet ist, die Stirnfläche des Befestigungsflansches eine im wesentlichen ebene Fläche bildet und die Schaltwelle im rechten Winkel zur Stirnfläche verläuft.

Sofern die Armatur als Stellventil und das bewegbare Organ zum Verschließen des Stellventils ausgebildet ist, kann der Schlitz vorzugsweise in einem Viertelkreisbogen verlaufen. Die Bewegung des freien Endes des mechanischen Zeigers entlang einer Viertelkreisbahn durch den viertelkreisbogenförmigen Schlitz entspricht einer Viertelkreisdrehung des bewegbaren Organs zum Öffnen bzw. Schließen des Stellventils.

An dieser Stelle sei noch angemerkt, daß das freie Ende des mechanischen Zeigers an der Außenseite des Befestigungsflansches von zusätzlichen Abtastelementen wie z. B. Endschaltern abgetastet werden kann und die Abtastelemente die erfaßte Stellung des mechanischen Zeigers in Form von Signalen an andere Anlagenteile übertragen.

Ebenfalls ist eine Ausführungsform möglich, bei welcher der mechanische Zeiger nur innerhalb der Ausnehmung angeordnet ist und einen oder mehrere ebenfalls innerhalb der Ausnehmung sitzende Mikroschalter betätigt.

Anstelle einer mechanischen Erfassung und Anzeige der Stellung der Schaltwelle kann alternativ der Sensor ein an der Schaltwelle angebrachtes Kodierelement und ein mit diesem berührungslos zusammenwirkendes Abtastelement umfassen. Eine derartige Ausbildung des Sensors hat in vielen Fällen den Vorteil einer unkomplizierten Anordnung und einer höheren Lebensdauer des Sensors. Derartige Sensoren besitzen heutzutage eine äußerst geringe Bauform, was für eine Anordnung innerhalb der Ausnehmung von Vorteil ist.

Bei einer Weiterbildung dieser Ausführung kann als Kodierelement ein an der Schaltwelle angebrachter Magnet und als Abtastelement ein benachbarter zur Schaltwelle angeordnetes und auf den Magneten reagierendes Reed-Relais vorgesehen sein. Die Vorteile von Reed-Relais liegen in ihren sehr kurzen Schaltzeiten und geringen Schaltkapazitäten sowie in ihrer hohen Lebensdauer. Außerdem sind sie staub- und feuchtigkeitsunempfindlich und dadurch wartungsfrei und können in jeder Lage betrieben werden.

Dabei kann an der Außenseite des Befestigungsflansches ein elektrischer Anschluß für das Reed-Relais vorgesehen sein. Auf diese Weise kann das Schaltsignal nach außen übertragen werden. Insbesondere kann der elektrische Anschluß als Schnittstelle für einen Prozeßrechner dienen, wodurch die Personalkosten gesenkt und die Sicherheit der Anlage erhöht wird.

Besonders vorteilhaft ist es, wenn an der Außenseite des Befestigungsflansches ein optisches Anzeigeelement vorgesehen ist, das zwischen dem Reed-Relais und dem elektrischen Anschluß geschaltet ist. Auf diese Weise erhält man zu jeder Zeit eine optische Information über die Stellung der Schaltwelle und somit über den Betriebszustand der Armatur. Die Stromversorgung des optischen Anzeigeelementes erfolgt dabei über den elektrischen Anschluß von außen.

Anstelle einer externen Stromversorgung über den elektrischen Anschluß kann auch innerhalb der Ausnehmung zusätzlich eine Batterie angeordnet sein, wobei das Reed-Relais zwischen Batterie und optischem Anzeigeelement geschaltet ist. Entsprechend der Stellung der Schaltwelle und somit des daran befestigten Magneten gegenüber dem Reed-Relais wird die Batterie vom Reed-Relais an das optische Anzeigeelement zu- oder abgeschaltet. Diese Anordnung hat den Vorteil, daß eine externe Stromversorgung nicht notwendig ist, da der vollständige Stromkreis einschließlich Stromversorgung innerhalb der Ausnehmung des Befestigungsflansches vorgesehen ist.

Vorzugsweise können um die Schaltwelle mehrere Reed-Relaisangeordnet sein. Diese Weiterbildung hat den Vorteil, daß verschiedene Winkelstellungen der Schaltwelle erfaßt werden können. Auf diese Weise wird die Erfassung der Rotationsdauer der Schaltwelle und somit die Dauer der Bewegung des Organs von der einen Arbeitsstellung in die andere Arbeitsstellung möglich. Denn auch die Drehzeit der Schaltwelle kann als Indiz dafür herangezogen werden, ob eine Fehlfunktion vorliegt oder nicht. Bei gegebenem Drehmoment von der Antriebsvorrichtung verlangsamt sich die Rotation der Schaltwelle, wenn z. B. im Lager der Schaltwelle eine zu hohe Reibung auftritt. Aufgrund des Absinkens der Drehzeit der Schaltwelle kann somit dieser Lagerschaden bemerkt werden.

Eine weitere Alternative einer berührungslosen Ausführung des Sensors besteht darin, daß als Kodierelement eine auf der Schaltwelle konzentrisch angebrachte Kodierscheibe und als Abtastelement eine Lichtschranke vorgesehen ist. Auch mit dieser Anordnung ist es möglich, unterschiedliche Winkelstellungen der Schaltwelle zu erfassen. Mit der Kodierscheibe ist in der Regel eine wesentlich genauere Erfassung der Winkelstellung der Schaltwelle möglich, da in wesentlich kleineren Winkelschritten gemessen werden kann. Somit ist diese Ausführung für eine Implementierung in einen Regelkreis zur Regelung der Stellung des bewegbaren Organs besonders geeignet.

Wegen ihrer geringen Bauform sollte ein Gabellichtschranke vorgesehen werden.

Sollte bei bestimmten Anwendungen der Platz innerhalb der Ausnehmung im Befestigungsflansch nicht ausreichen, wenn z. B. mehrere Sensoren und zugehörige Bauelemente vorgesehen werden müssen, so kann bei einer weiteren bevorzugten Ausbildung der Erfindung eine auf die Stirnfläche des Befestigungsflansches aufsetzbare Zwischenplatte vorgesehen werden, die zur Aufnahme eines oder mehrerer Sensoren und zugehöriger Bauelemente einen Durchbruch enthält. Der besondere Vorteil der Anordnung einer Zwischenplatte besteht ebenfalls darin, daß in Anlagen bereits eingebauter Armaturen mit den zuvor beschriebenen Sensoren in einfacher Weise nachgerüstet werden können. Die Anordnung der Zwischenplatte ermöglicht einen modularen Aufbau, wobei die gegenüber der Armatur leicht erhöhte Anordnung einer Antriebsvorrichtung auf der Zwischenplatte das Bauvolumen der gesamten Einheit nur unwesentlich vergrößert. Vorzugsweise fluchtet der Durchbruch in der Zwischenplatte im wesentlichen mit der Ausnehmung in der Stirnseite des Befestigungsflansches.

Vorzugsweise kann innerhalb der Ausnehmung zusätzlich noch mindestens ein weiterer Sensor zur Überwachung der Temperatur des Mediums und/oder zur Erfassung einer Leckage im Bereich der Durchführung der Schaltwelle durch den Befestigungsflansch angeordnet sein. Mit derartigen zusätzlichen Sensoren ist eine vollständige Überwachung der Armatur möglich.

Schließlich sei noch erwähnt, daß es sich bei der erfindungsgemäßen Armatur vorzugsweise um ein Stellventil zur Steuerung des Durchflusses eines Mediums handeln kann, bei welchem das bewegbare Organ zum Verschließen der Armatur ausgebildet ist und die Schaltwelle gegenüber der Armatur abgedichtet durch den Flansch nach außen geführt ist.

Nachfolgend werden vorteilhafte Ausführungsformen der Erfindung anhand der beiliegenden Zeichnungen näher erläutert. Es zeigen:

Fig. 1   eine Ausführung der Erfindung mit einem mechanischen Zeiger im Längsschnitt (a) und in der Draufsicht (b);

Fig. 2   eine zweite Ausführungsform mit einem Reed-Relais im Längsschnitt (a) und in Draufsicht (b);

Fig. 3   eine dritte Ausführung mit einem Reed-Relais im Längsschnitt (a) und in Draufsicht (b);

Fig. 4   eine vierte Ausführungsform mit zwei Reed-Relais im Längsschnitt (a) und in Draufsicht (b); und

Fig. 5   eine fünfte Ausführungsform mit einer Kodierscheibe und einer Lichtschranke im Längsschnitt (a) und in Draufsicht (b).

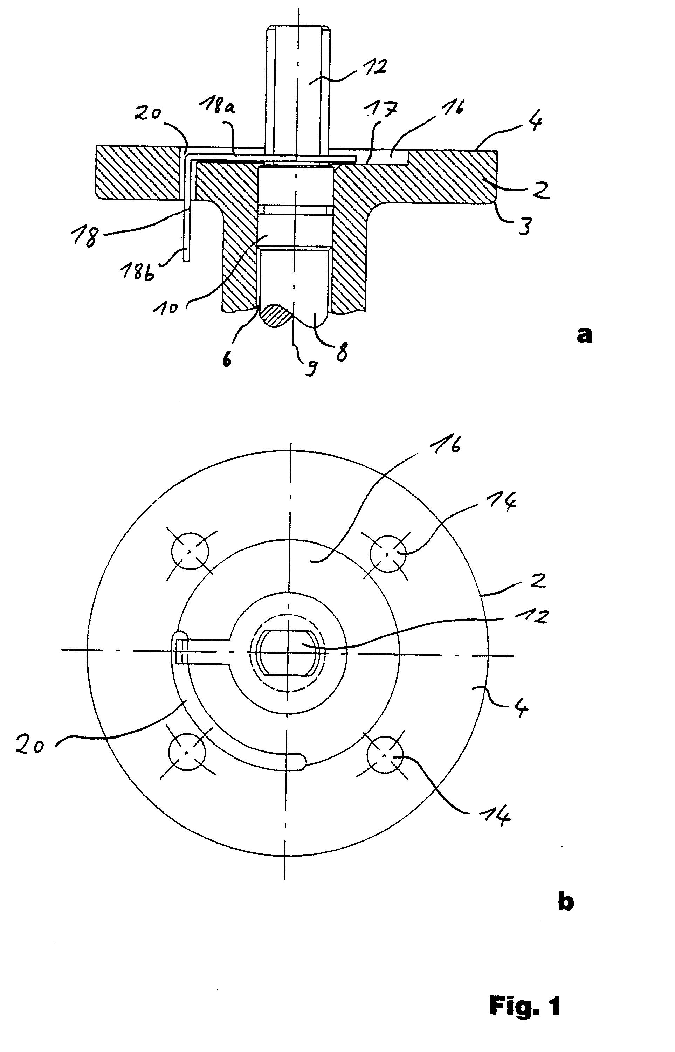

In Fig. 1a und b ist ein Befestigungsflansch 2 mit einer Außenseite 3 und einer Stirnfläche 4 dargestellt. Der Befestigungsflansch 2 ist Teil eines nicht dargestellten Stellventils. Durch den Befestigungsflansch 2 verläuft rechtwinklig zur Stirnfläche 4 eine Bohrung 6, welche an der Stirnfläche 4 endet. Durch die Bohrung 6 erstreckt sich eine Schaltwelle 8 nach außen. Die Schaltwelle 8 ist drehfest mit einem nicht dargestellten Schließorgan des Stellventils verbunden, welches beispielsweise als Klappenscheibe, Kugel, Küken oder Kegel ausgeführt sein kann. Dabei bildet die Längsachse 9 der Schaltwelle 8 gleichzeitig die Gelenkachse des Schließorgans. Die Schaltwelle 8 besitzt einen Dichtabschnitt 10, so daß sich die Schaltwelle 8 mit der Innenwandung der Bohrung 6 in dichtender Verbindung befindet, im Bereich der Bohrung 6 der Innenraum des Stellventils gegenüber der Umgebung abgedichtet ist und durch das Stellventil geleitetes Medium nicht nach außen dringen kann.

Das freie Ende 12 der Schaltwelle 8 ist als Anschlußstück für einen Schwenkhebel oder eine Ausgangswelle eines nicht dargestellten Schwenkantriebes vorgesehen. Der Schwenkantrieb ist mit seinem Gegenflansch auf der Stirnfläche 4 des Befestigungsflansches 2 montierbar, wobei bei aufgesetztem Schwenkantrieb dessen Ausgangswelle mit dem freien Ende 12 der Schaltwelle 8 gekuppelt ist. Zur Befestigung des nicht dargestellten Schwenkantriebes sind im Befestigungsflansch 4 Befestigungslöcher vorgesehen, wie Fig. 1b erkennen läßt. Mit Hilfe des Schwenkantriebes wird die Schaltwelle 8 gedreht, wodurch das bewegbare Organ das Stellventil öffnet oder schließt.

An der Stirnfläche 4 des Befestigungsflansches 2 ist eine Ausnehmung 16 vorgesehen, welche gegenüber-der Stirnfläche 4 eine Vertiefung bildet. Die Ausnehmung 16 ist kreisförmig ausgebildet und konzentrisch zur Längsachse 9 der Schaltwelle 8 angeordnet (Fig. 1b). Somit verläuft die Schaltwelle 8 durch die Ausnehmung 16. Wie aus Fig. la ersichtlich ist, besitzt die Ausnehmung eine bestimmte Tiefe, wobei der Boden 17 der Ausnehmung 16 eine ebene Fläche bildet, welche parallel zur Stirnfläche 4 verläuft, die ebenfalls eine ebene Fläche bildet.

Für die Anzeige der Drehstellung der Schaltwelle 8 ist ein mechanischer Stellungsanzeiger 18 vorgesehen. Der mechanische Stellungsanzeiger 18 besitzt einen flachen, geradlinig und parallel zur Stirnfläche 4 bzw. zum Boden 17 verlaufenden ersten Schenkel 18a, der an der Schaltwelle 8 drehfest befestigt und innerhalb der Ausnehmung 16 zwischen deren Boden 17 und der von der Stirnfläche 4 aufgespannten Ebene angeordnet ist. An den ersten Schenkel 18a schließt sich rechtwinklig ein geradlinig verlaufender zweiter Schenkel 18b an, welcher von der Stirnfläche 4 weg gerichtet und durch einen Längsschlitz 20 geführt ist, der entlang einer Viertelkreisbahn um die Längsachse 9 der Schaltwelle 8 verläuft. Der mechanische Stellungsanzeiger 18 kann aus einem flachen Blech bzw. Flacheisen hergestellt sein, so daß in Abhängigkeit von der Dicke des Stellungsanzeigers 18 sowohl die Tiefe der Ausnehmung 16 als auch die Dicke des Längsschlitzes 20 relativ gering gehalten werden kann.

Der mechanische Stellungsanzeiger 18 ermöglicht auf mechanischem Wege eine direkte Anzeige der Drehstellung der Schaltwelle 8 und somit der Betriebsstellung des Schließorgans. Dabei zeigt der mechanische Stellungsanzeiger 18 die Schließ- bzw. Öffnungsstellung des Schließorgans an, wenn sich der zweite Schenkel 18b des Stellunganzeigers 18 benachbart zu dem einen bzw. dem anderen Ende des Längsschlitzes 20 befindet.

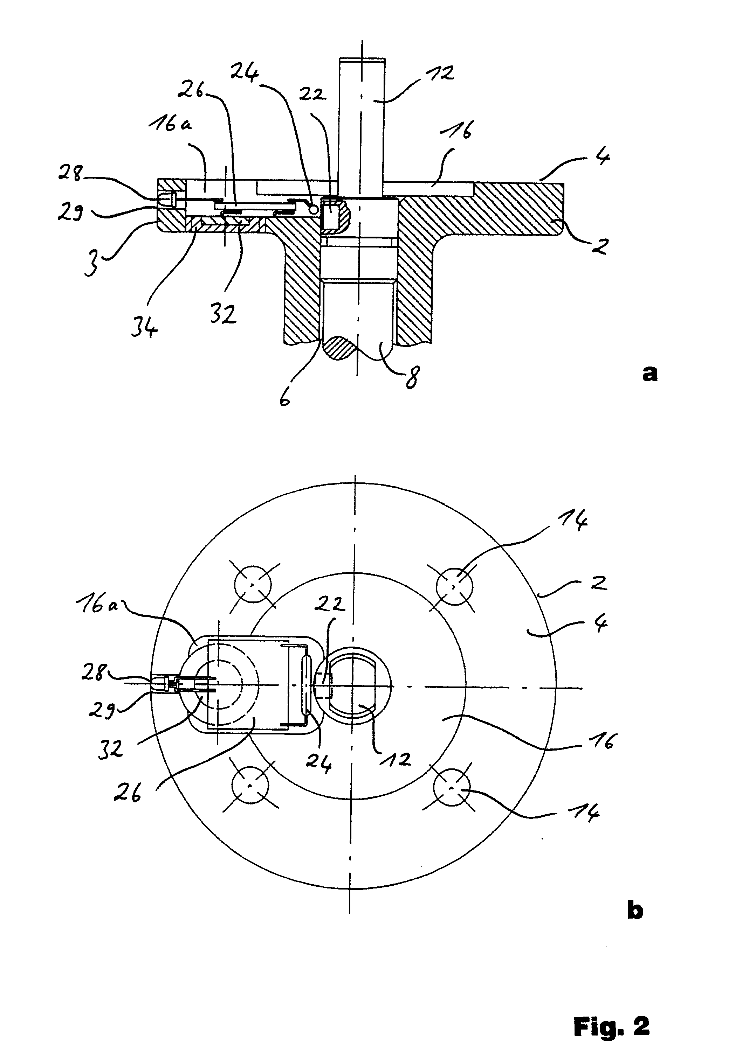

In den folgenden Fig. 2 bis 5 sind weitere Ausführungen der Erfindung dargestellt, wobei die gleichen Bezugszeichen für die gleichen Teile verwendet werden, auf die dann nicht näher eingegangen wird, da sie bereits zuvor beschrieben wurden.

Die in den Fig. 2 bis 5 dargestellten weiteren Ausführungsbeispiele der Erfindung unterscheiden sich von dem in Fig. 1 dargestellten Ausführungsbeispiel dadurch, daß die Erfassung der Drehstellung der Schaltwelle 8 berührungslos erfolgt.

Bei der in Fig. 2 dargestellten Ausführung ist zusätzlich zu der Ausnehmung 16 eine weitere Ausnehmung 16a vorgesehen, welche eine größere Tiefe als die Ausnehmung 16 aufweist und sich von der Schaltwelle 8 über den Rand der Ausnehmung 16 hinaus erstreckt. Auf der Höhe der zusätzlichen Ausnehmung 16a ist an der Schaltwelle 8 ein Magnet 22 angebracht, der auf ein Reed-Relais 24 wirkt, das innerhalb der zusätzlichen Ausnehmung 16a liegt. Für die Anordnung innerhalb der Ausnehmung 16a, deren räumliche Abmessungen begrenzt sind, sind Reed-Relais wegen ihrer kleinen Bauform besonders vorteilhaft. Ferner ist innerhalb der Ausnehmung 16a eine Platine 26 angeordnet, auf der die Kontakte des Reed-Relais 24 angebracht sind. Ebenfalls ist eine Leuchtdiode 28 an der Platine 26 angelötet, welche durch eine zur Außenseite 3 des Befestigungsflansches 2 führende Bohrung 29 gesteckt ist. Ferner ist an die Platine 26 eine Batterie 32 angeschlossen, die innerhalb einer zur Ausnehmung 16a offenen Batterieaufnahme 34 angeordnet ist. Das Reed-Relais 24, die Leuchtdiode 28 und die Batterie 32 sind in Reihe zu einem geschlossenen Stromkreis geschaltet. Durch die Annäherung des Magneten 22 werden die nicht dargestellten Kontaktzungen des Reed-Relais 24 geschlossen, so daß an die Leuchtdiode 28 die von der Batterie 32 erzeugte Spannung angelegt wird und die Leuchtdiode 28 aufleuchtet. Auf diese Weise wird eine optische Anzeige der Drehstellung der Schaltwelle 8 geschaffen.

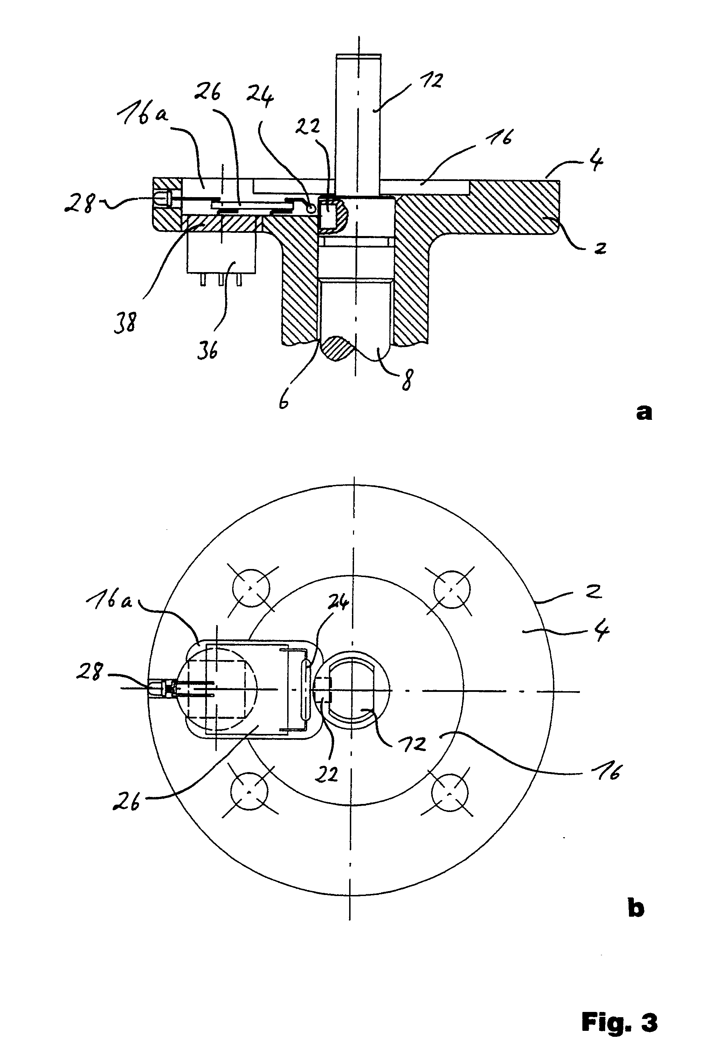

Anstelle der Batterie 32 und der Batterieaufnahme 34 kann ein Stecker 36 an der Außenseite 3 des Befestigungsflansches 2 vorgesehen werden, welcher auf einer Steckeraufnahme 38 sitzt, durch die die Anschlußkontakte zur Platine 26 geführt sind, wie Fig. 3 erkennen läßt. Bei dieser Ausführung erfolgt somit über den Stecker 36 die Stromversorgung von außen, indem an den Stecker 36 eine externe Spannungsquelle angeschlossen wird, um die Leuchtdiode 28 zum Leuchten zu bringen. Zusätzlich hat der Stecker 36 noch die Aufgabe, die vom Reed-Relais 24 erzeugten Schaltsignale nach außen zu führen. Beispielsweise kann an den Stecker 36 ein Interface angeschlossen werden, welches die die Drehstellung der Schaltwelle 8 darstellenden Schaltsignale an einen Prozeßrechner überträgt, so daß der jeweilige Zustand des Stellventils im Betrieb automatisch überwacht werden kann. Ferner kann an den Stecker 36 auch ein akustischer Wandler angeschlossen werden. Es ist ebenfalls denkbar, die Leuchtdiode 28 wegzulassen.

Um nicht nur eine bestimmte Drehstellung, sondern mehrere unterschiedliche Drehstellungen der Schaltwelle 8 erfassen zu können, können um die Schaltwelle 8 herum mehrere Reed-Relais 24 angeordnet sein.

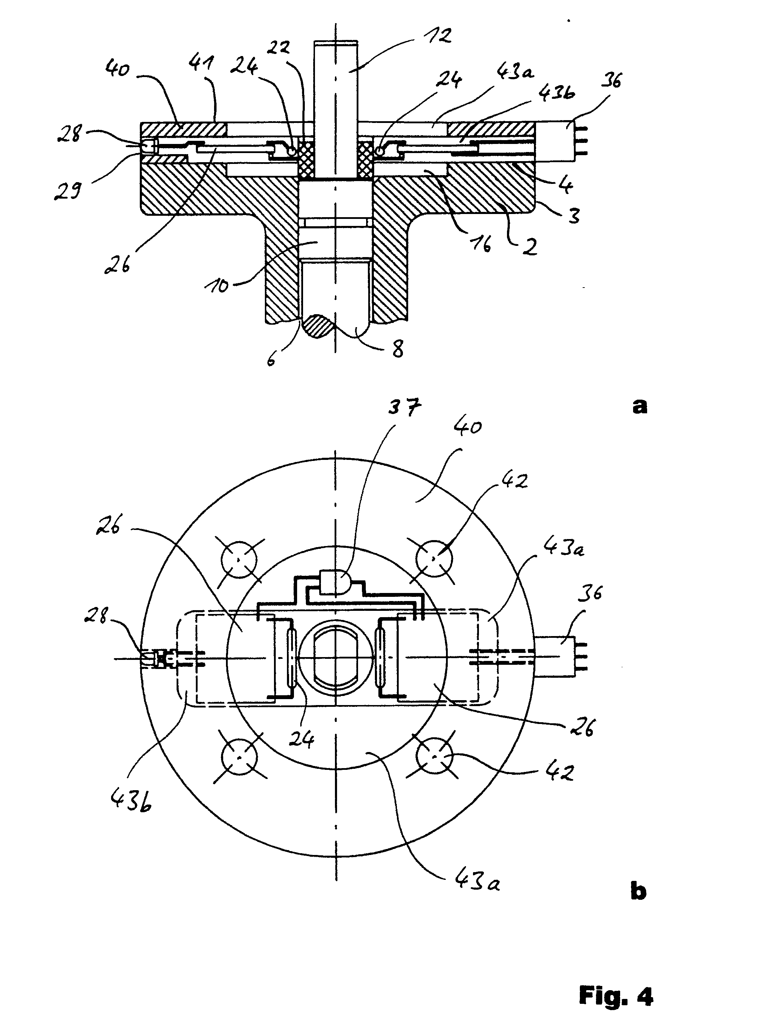

In Fig. 4 ist eine Ausführung dargestellt, bei welcher zwei Reed-Relais 24 in gegenüberliegenden Positionen angeordnet sind. An dieser Stelle sei angemerkt, daß das in Fig. 4 rechte Reed-Relais 24 unter Weglassung der Leuchtdiode direkt an den Stecker 36 angeschlossen ist. Beide Platinen 26 sind über ein UND-Glied 37 miteinander gekoppelt. Auf diese Weise wird eine sogenannte 2-Kreis-Schaltung gebildet, welche sicherstellt, daß über den Stecker 36 das korrekte Stellungssignal an den Prozeßrechner oder die Warte abgegeben wird, auch wenn einmal die Leuchtdiode 28 ausgefallen ist und somit dem Wartungspersonal vor Ort eine falsche Anzeige liefert. Die Funktion der Leuchtdiode 28 wird also durch das zweite, gemäß Fig. 4b rechte Reed-Relais 24 überwacht.

Bei der in Fig. 4 dargestellten Ausführung sind die Reed-Relais 24, die Platinen 26 und die Leuchtdiode 28 nicht in der Ausnehmung 16, sondern innerhalb einer Zwischenplatte 40 angeordnet. Die Zwischenplatte 40 liegt flächig auf der Stirnfläche 4 des Befestigungsflansches 2 auf, so daß nun der nicht dargestellte Schwenkantrieb auf der gegenüberliegenden Stirnfläche 41 der Zwischenplatte 40 montierbar ist. Die Stirnfläche 41 der Zwischenplatte 40 bildet eine ebene Fläche und verläuft parallel zur Stirnfläche 4 des Befestigungsflansches 2. Ferner sind in der Zwischenplatte 40 Befestigungslöcher 42 vorgesehen, die mit den Befestigungslöchern 14 (vgl. Fig. 1b bis 3b und 5b) im Befestigungsflansch 2 fluchten.

Die Zwischenplatte 40 weist einen Durchbruch 43a auf, der mit der Ausnehmung 16 in der Stirnfläche 4 des Befestigungsflansches 2 fluchtet, wie Fig. 4a besonders gut erkennen läßt. Zusätzlich sind in der der Stirnfläche des Befestigungsflansches 2 gegenüberliegenden Stirnfläche der Zwischenplatte 40 an deren Unterseite Ausnehmungen 43b vorgesehen, die mit dem Durchbruch 43a in Verbindung stehen und sich radial nach außen erstrecken. Der Durchbruch 43a und die Ausnehmungen 43b dienen zur Aufnahme der Reed-Relais 24, der Platine 26, der Leuchtdiode 28 sowie der Zuleitungen zu dem Stecker 36, welcher in der dargestellten Ausführung am Umfangsrand der Zwischenplatte 40 angebracht ist. Da diese Bauteile relativ kompakt sind, kann die Dicke der Zwischenplatte 40 gering gehalten werden, so daß zwischen dem freien Ende 12 der Schaltwelle 8 und dem auf die Stirnfläche 41 der Zwischenplatte 40 aufzusetzenden Schwenkantrieb kein Zwischenwellenstück gekuppelt zu werden braucht. Somit hält sich die hieraus resultierende leichte Erhöhung in vertretbaren Grenzen. Der Einsatz der Zwischenplatte 40 ist nämlich dann sinnvoll, wenn der in der Ausnehmung 16 vorhandene Raum nicht mehr ausreicht, ohne jedoch auf die Vorteile der erfindungsgemäßen Anordnung verzichten zu müssen. Mit Hilfe des Durchbruchs 43a und der Ausnehmungen 43b in der Zwischenplatte 40 wird somit Raum für die Aufnahme zusätzlicher Bauelemente zur Erfassung der Stellung der Schaltwelle 8 und sonstiger Betriebszustände des Stellventils geschaffen. Die Verwendung der zuvor beschriebenen Zwischenplatte 40 ist insbesondere für in bestehende Anlagen bereits eingebaute Armaturen geeignet.

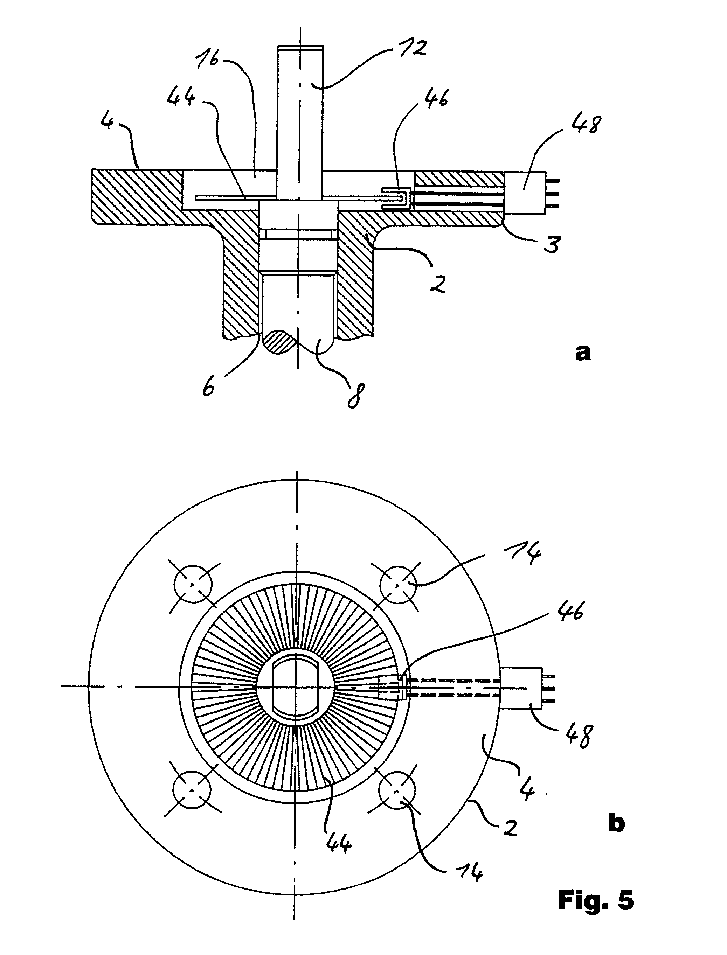

Eine weitere und genauere Möglichkeit, unterschiedliche Drehwinkelstellungen der Schaltwelle 8 erfassen zu können, bietet die Anordnung einer Kodierscheibe 44, wie sie Fig. 5 zeigt. Die Kodierscheibe 44 ist dabei auf der Schaltwelle 8 innerhalb der Ausnehmung 16 konzentrisch angebracht. Ferner ist innerhalb der Ausnehmung 16 eine Gabellichtschranke 46 angeordnet, durch die der Umfangsrand der Kodierscheibe 44 läuft und die an einen an der Außenseite 3 des Befestigungsflansches 2 angebrachten Stecker 48 angeschlossen ist. Die Gabellichtschranke 46 besitzt eine besonders kompakte Bauform und ist daher besonders für eine Anordnung innerhalb der Ausnehmung 16 geeignet. Die Kodierscheibe 44 besitzt Markierungen in geringen Winkelabschnitten, z. B. in 2,5° - Schritten, was eine sehr genaue Erfassung der Drehwinkelstellung der Schaltwelle 8 erlaubt. Somit ist es auch möglich, aus der Veränderung der Drehwinkelstellung 8 über die Zeitdauer die Drehgeschwindigkeit der Schaltwelle 8 zu bestimmen. Eine Bestimmung der Rotationsdauer der Schaltwelle 8 ist für die Überwachung der Funktion des Stellventils wichtig, da eine zu geringe Rotationsdauer auf Fehler wie z.B. einen erhöhten Drehwiderstand, eine falsche Montage oder eine Erhärtung von zwischen der Schaltwelle 8 und der Bohrung 6 sitzenden Dichtringen schließen läßt.

Ferner sei noch darauf hingewiesen, daß innerhalb der Ausnehmung 16 bzw. 16a des Befestigungsflansches und ggf. innerhalb der Zwischenplatte 40 zusätzlich noch mindestens ein weiterer Sensor zur Überwachung sonstiger Betriebsparameter wie der Temperatur des Mediums und/oder der Dichtheit der Schaltwelle 8 angeordnet werden kann. Insbesondere die Überprüfung der Dichtheit der Schaltwelle 8 durch einen auf Feuchtigkeit reagierenden Sensor und eine daraufhin erfolgende Leckanzeige ist besonders vorteilhaft, da auf diese Weise eine Leckage im Stellventil frühzeitig erkannt werden kann.

**Patentansprüche**

1. Armatur mit einem über eine Schaltwelle (8) in verschiedene Betriebsstellungen bewegbaren Organ und mit einem Befestigungsflansch (2), durch dessen Stirnfläche (4) die Schaltwelle (8) mit ihrem einen Ende (12) für den Anschluß an eine an der Stirnfläche (4) des Befestigungsflansches (2) zu befestigende Antriebsvorrichtung nach außen geführt ist, dadurch gekennzeichnet, daß mindestens ein Sensor (18; 22; 24; 44, 46) zur Erfassung der Stellung der Schaltwelle (8) und somit der Betriebsstellung des bewegbaren Organs innerhalb einer an der Stirnfläche (4) des Befestigungsflansches (2) vorgesehenen und zur Schaltwelle (8) offenen Ausnehmung (16, 16a) angeordnet ist.

2. Armatur nach Anspruch 1, dadurch gekennzeichnet, daß der Sensor aus einem mechanischen Zeiger (18) besteht, der mit der Schaltwelle (8) drehfest verbunden und innerhalb der Ausnehmung (16) entsprechend der Stellung der Schaltwelle (8) frei bewegbar angeordnet ist, wobei sich das freie Ende (18b) des mechanischen Zeigers (18) durch eine die Ausnehmung (16) mit der Außenseite (3) des Befestigungsflansches (2) außerhalb von dessen Stirnfläche (4) verbindende Durchführung (20) erstreckt.

3. Armatur nach Anspruch 2, dadurch gekennzeichnet, daß der mechanische Zeiger (18) einen ersten Schenkel (18a), der im wesentlichen radial an der Schaltwelle (8) befestigt und innerhalb der Ausnehmung (16) angeordnet ist, und einen winklig an den ersten Schenkel (18a) angesetzten zweiten Schenkel (18b) aufweist, der von der Stirnfläche (4) weggerichtet ist und sich durch einen die Durchführung bildenden länglichen Schlitz (20) erstreckt, der entlang einer Kreisbahn um die Längsachse (9) der Schaltwelle (8) verläuft.

4. Armatur nach Anspruch 1, dadurch gekennzeichnet, daß der Sensor ein an der Schaltwelle (8) angebrachtes Kodierelement (22; 44) und ein mit diesem berührungslos zusammenwirkendes Abtastelement (24; 46) umfaßt.

5. Armatur nach Anspruch 4, dadurch gekennzeichnet, daß als Kodierelement ein an der Schaltwelle (8) angebrachter Magnet (22) und als Abtastelement ein benachbart zur Schaltwelle (8) angeordnetes und auf den Magneten (22) reagierendes Reed-Relais (24) vorgesehen ist.

6. Armatur nach Anspruch 5, dadurch gekennzeichnet, daß an der Außenseite (3) des Befestigungsflansches (2) ein elektrischer Anschluß (36) für das Reed-Relais (24) vorgesehen ist.

7. Armatur nach Anspruch 6,
dadurch gekennzeichnet, daß an der Außenseite (3) des Befestigungsflansches (2) ein optisches Anzeigeelement (28) vorgesehen ist, das zwischen dem Reed-Relais (24) und dem elektrischen Anschluß (36) geschaltet ist.

8. Armatur nach Anspruch 5,
dadurch gekennzeichnet, daß an der Außenseite (3) des Befestigungsflansches (2) ein optisches Anzeigeelement (28) vorgesehen und innerhalb der Ausnehmung (16, 16a) zusätzlich eine Batterie (32) angeordnet ist, wobei das Reed-Relais (24) zwischen Batterie (32) und optischem Anzeigeelement (28) geschaltet ist.

9. Armatur nach einem der Ansprüche 5 bis 8,
dadurch gekennzeichnet, daß um die Schaltwelle (8) herum mehrere Reed-Relais (24) angeordnet sind.

10. Armatur nach Anspruch 2,
dadurch gekennzeichnet, daß als Kodierelement eine auf der Schaltwelle (8) konzentrisch angebrachte Kodierscheibe (44) und als Abtastelement eine Lichtschranke (46) vorgesehen ist.

11. Armatur nach Anspruch 10,
dadurch gekennzeichnet, daß als Lichtschranke eine Gabellichtschranke (46) vorgesehen ist.

12. Armatur nach einem der Ansprüche 1 bis 11,
gekennzeichnet durch eine auf die Stirnfläche (4) des Befestigungsflansches (2) aufsetzbare Zwischenplatte (40), die zur Aufnahme eines oder mehrerer Sensoren (22, 24) und zugehöriger Bauelemente (26, 28) einen Durchbruch (43a) enthält.

13. Armatur nach Anspruch 12,
dadurch gekennzeichnet, daß der Durchbruch (43a) in der Zwischenplatte (40) im wesentlichen mit der Ausnehmung (16) in der Stirnseite (4) des Befestigungsflansches (2) fluchtet.

14. Armatur nach einem der Ansprüche 1 bis 13,
dadurch gekennzeichnet, daß die Armatur als Stellventil zur Steuerung des Durchflusses eines Mediums und das bewegbare Organ zum Verschließen der Armatur ausgebildet ist und daß die Schaltwelle (8) gegenüber der Armatur abgedichtet (10) durch den Befestigungsflansch (2) nach außen geführt ist und im rechten Winkel zur Stirnfläche (4) verläuft, welche eine im wesentlichen ebene Fläche bildet.

15. Armatur nach Anspruch 14 und 3,
dadurch gekennzeichnet, daß der Schlitz (20) in einem Viertelkreisbogen verläuft.

16. Armatur nach einem der Ansprüche 1 bis 15,
dadurch gekennzeichnet, daß innerhalb der Ausnehmung (16, 16a) zusätzlich noch mindestens ein weiterer Sensor zur Überwachung sonstiger Betriebsparameter wie der Temperatur des Mediums und/oder der Dichtheit der Durchführung (6) der Schaltwelle (8) durch den Befestigungsflansch (2) angeordnet ist.

a

b

**Fig. 1**

Fig. 2

a

b

**Fig. 3**

**Fig. 4**

a

b

Fig. 5

Europäisches
Patentamt

Nummer der Anmeldung

**EUROPÄISCHER
RECHERCHENBERICHT**

**EP 91 10 0346**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 318 010  (HURLEY)<br>* Zusammenfassung * * Spalte 2, Zeile 34 - Spalte 5, Zeile 19; Figuren 2, 3 *<br>– – – | 1,4,6,10, 11 | F 16 K 37/00 |
| A | EP-A-0 051 961  (CROSBY)<br>* Zusammenfassung; Figur 2 *<br>– – – | 1,4,5,6,9, 12,14 | |
| A | FEINWERK TECHNIK<br>& MESSTECHNIK vol. 95, no. 5, August 1987, DE Seiten 304 - 310; CARL HANSER VERLAG: "DREHGEBER ALS HOCHGENAUE WEG-UND WINKELMESSGERÄTE"<br>* das ganze Dokument *<br>– – – | 1 | |
| A | EP-A-0 182 733  (XOMOX)<br>* Zusammenfassung; Figuren 1, 2, 3 *<br>– – – | 1,5 | |
| A | EP-A-0 124 242  (MOOG)<br>* Zusammenfassung; Figuren 1, 3, 4 *<br>– – – | 1 | |
| A | GB-A-1 526 211  (GRIFFITHS)<br>* Seite 2, Zeilen 23 - 41; Figuren 1, 2 *<br>– – – | 1,2,3,14, 15 | RECHERCHIERTE SACHGEBIETE (Int. Cl.5) |
| A | DE-A-3 743 312  (BRÄKELMANN)<br>– – – | | F 16 K<br>G 01 D<br>G 01 B |
| A | GB-A-2 138 108  (SMITH)<br>– – – – – | | |

Der vorliegende Recherchenbericht wurde für alle Patentansprüche erstellt

| Recherchenort | Abschlußdatum der Recherche | Prüfer |
|---|---|---|
| Den Haag | 25 April 91 | FONSECA Y FERNANDEZ |